# FASCICULE DE BREVET EUROPEEN

(11) **EP 0 365 090 B1**
(45) Date de publication et mention de la délivrance du brevet: **20.04.1994**
(21) Numéro de dépôt: 89202598.2
(22) Date de dépôt: 16.10.1989
(51) Int. Cl.: H04N 7/00

(54) **Dispositif de doublement du rythme de signaux de télévision, et décodeur d'images de télévision comprenant un tel dispositif**
Einrichtung zum Verdoppeln der Rate von Fernsehbild-Signalen, und Fernsehbild-Dekodierer mit einer solchen Einrichtung
Device for doubling the sequential rate of television signals, and television picture decoder comprising such a device

(30) Priorité: 21.10.1988 FR 8813809
(43) Date de publication de la demande: 25.04.1990
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Haghiri, Mohammad-Rèza Société Civile S.P.I.D., F-75007 Paris (FR); Guichard, Philippe Société Civile S.P.I.D., F-75007 Paris (FR)
(74) Mandataire: Landousy, Christian

(56) Documents cités:
- EP-A- 0 185 503
- EP-A- 0 252 563
- SMPTE JOURNAL, vol. 92, no. 7, juillet 1983, pages 719-823; R.N. JACKSON et al.: "Compatible systems for high-quality television"
- IBC'84, INTERNATIONAL BROADCASTING CONVENTION, Brighton, 21-25 septembre 1984,pages 111-115; I. CHILDS et al.: "The compatibility of HDTV sources and displays with present day TV systems"
- IBC'88, PROCEEDINGS OF THE INTERNATIONAL BROADCASTING CONVENTION, Brighton, 23-27 septembre 1988, pages 62-65, IEE, Londres, GB; F.W.P. VREESWIJK et al.: "HD-MAC coding of high definition television signals"
- COLLOQUE TVHD'87, Ottawa, 4-8 octobre 1987, vol. 1, pages 6.2.2-6.2.28; P.BERNARD et al.: "Analyse de structures de sous-échantillonnage spatio-temporel d'un signal TVHD en vue de sa transmission dans un canal MAC"

## Description

La présente invention concerne un dispositif de doublement du rythme de signaux de télévision selon un principe de répétition de trame, ainsi qu'un décodeur d'images de télévision comprenant un tel dispositif.

De manière inéluctable, les futures émissions de télévision seront très rapidement filmées en haute définition. La norme D2-MAC/Paquets résultant des travaux européens depuis quelques années améliore déjà considérablement la qualité des images de télévision en remédiant notamment aux inconvénients du multiplexage fréquentiel propre au standard SECAM, mais s'appuie sur une constante immuable, un nombre de lignes égal à 625, ne permettant pas d'obtenir une résolution d'image de qualité. L'objectif des travaux relatifs à la haute définition est de proposer, horizontalement et verticalement, une résolution spatiale, sensiblement deux fois plus grande que celle permise par la norme D2 MAC/Paquet, tout en utilisant le canal analogique prévu dans le standard MAC et dont le débit est limité au quart de la quantité d'informations disponibles dans ces images à haute définition.

Des codeurs, à l'émission, et des décodeurs, à la réception, ont donc été mis au point pour réaliser cette adaptation des volumes de données à transmettre au canal disponible. Le principe retenu est de procéder à une décimation spatio-temporelle permettant d'éliminer trois échantillons de signal sur quatre avant transmission. On sait par ailleurs que, dans une scène filmée, plus la vitesse de déplacement est grande, moins l'oeil est sensible à la résolution spatiale, et réciproquement. La décimation spatio-temporelle est donc accompagnée, selon le principe proposé, d'une adaptation de ladite décimation destinée à rendre le contenu spectral tridimensionnel le plus fidèle possible : on procède à cet effet à une modification du type d'échantillonnage du signal selon que les zones d'images traitées (ces images sont divisées en blocs) correspondent à des parties d'image fixes, faiblement mobiles, ou fortement mobiles.

Ces principes sont décrits de manière détaillée dans la communication "HD-MAC coding of high definition television signals", F.W.P. Vreeswijk, F. Fonsalas, T.I.P. Trew, C.C. Smith et M.R. Haghiri, présentée à l'exposition IBC'88, Brighton (Grande-Bretagne), 23-27 septembre 1988. Plus précisément, selon le principe défini d'une utilisation de trois types de sous-échantillonnage correspondant à trois rythmes (ou cadences) de transmission différents et conventionnellement appelés par la valeur de la période correspondante, soit ici respectivement 80, 40 et 20 millisecondes, l'image, découpée en blocs comme on vient de le rappeler pour que les traitements soient adaptés au contenu local de l'image, est reçue dans le codeur par trois branches en parallèle réalisant l'un des trois sous-échantillonnages selon la gamme de mouvements. Pour chaque bloc, l'une des trois branches est choisie et ce sont les échantillons correspondants qui sont envoyés pour transmission sous forme analogique dans le canal de transmission analogique prévu dans le standard MAC, la décision du choix de branche 80, 40 ou 20 ms étant prise par un circuit de décision lui-même précédé d'un circuit d'estimation desdits mouvements. Un canal dit d'assistance numérique (en anglais, Digitally Assisted TeleVision) assure la transmission des informations de mouvement et de décision vers le décodeur situé à la réception.

Ce décodeur comprend de façon correspondante trois branches dites également 80, 40 et 20 ms fonctionnant de façon continue et en parallèle. A chaque instant, grâce aux données d'assistance numérique, la branche à sélectionner est connue. En effet, comme les signaux correspondant aux trois rythmes définis plus haut sont transmis par multiplexage temporel avec trois échantillonnages spatio-temporels différents, les données courantes ne peuvent alimenter que la branche sélectionnée. Après régénération des mailles de données pour disposer de la même maille d'échantillonnage quels que soient les blocs d'image voisins qui se succèdent, les signaux de sortie de la branche ainsi sélectionnée sont délivrés pour constituer la sortie haute définition dudit décodeur.

Le document cité précise également le principe du choix de branche, reposant sur la détermination, pour chaque bloc et pour les trois branches, d'un calcul de distorsion par rapport à l'image originale et la sélection, pour la transmission, de celle des branches qui présente la distorsion minimale. Ce document précise aussi le principe de l'estimation et de la compensation de mouvement, prévoyant l'élimination, avant transmission, d'une trame sur deux, et, à la réception, la retitution des trames manquantes par utilisation de l'information temporelle existant entre les deux trames transmises. Cette information temporelle consiste le plus souvent en une simple information de translation représentée par un vecteur orienté dans la direction du mouvement. D'une manière générale, l'estimation et la compensation de mouvement ainsi effectuées exploitent la redondance du contenu temporel des séquences d'images, en extrayant avant transmission des informations auxiliaires, ensuite transmises en parallèle des informations d'image principales pour permettre la reconstruction des images à la réception.

Ces techniques diverses conduisent à des images qui sont effectivement de grande qualité, mais dans lesquelles, en raison de la fréquence trame de 50 hertz, il peut subsister, notamment dans les zones d'image de très forte luminosité, un phénomène de papillotement, d'autant plus perceptible que l'écran de réception est plus grand, et donc très gênant visuellement.

Un but de l'invention est de proposer un dispositif de doublement du rythme de signaux de télévision apte à éliminer un tel phénomène de papillotement des images.

L'invention concerne à cet effet un dispositif caractérisé en ce que, lesdits signaux correspondant à une séquence d'images de télévision à haute définition conformes au standard HDMAC et organisées en trames impaires et paires entrelacées, ledit dispositif comprend :
(a) un circuit de division par deux de la durée des lignes de la séquence d'images ;
(b) en série avec ledit circuit, un étage de mémorisation des trames successives fournies par ledit circuit sur une durée telle que les informations présentées en sortie dudit circuit et dudit étage de mémorisation correspondent à une période d'image et à la cadence correspondant au rythme à obtenir après conversion, comprenant lui-même en série des première, deuxième et troisième mémoires de trame imposant chacune un retard égal à la moitié de la période des trames de la séquence d'images, les signaux de sortie desdites première, deuxième et troisième mémoires de trame et dudit circuit étant appelés conventionnellement et respectivement I₁, I₂, I₃, I₄;
(c) une première voie de traitement des images dites stationnaires par répétition de chaque paire de trames sucessives, comprenant elle-même un premier commutateur prévu pour recevoir en parallèle chacun des signaux I₁ à I₄ et délivrer successivement, à une fréquence double de celle de la séquence d'images, les signaux I₃, I₄, I₁, I₂ respectivement ;
(d) une deuxième voie de traitement des images dites faiblement mobiles ou compensables par demi-somme compensée en mouvement, comprenant elle-même, en série, d'une part un additionneur, prévu pour effectuer la demi-somme des signaux I₂ et I₄ correspondant à la trame paire courante et à la trame impaire qui l'a précédée tout en tenant compte, pour ladite compensation du mouvement d'un signal à l'autre, de l'information additionnelle prévue par le standard HDMAC relativement au mouvement entre ces trames et reçue sur une troisème entrée dudit additionneur, et d'autre part un deuxième commutateur, prévu pour recevoir en parallèle ladite demi-somme compensée en mouvement et le signal I₃ et délivrer successivement, à ladite fréquence double de celle de la séquence d'images, cette demi-somme compensée ou ladite trame de sortie de la deuxième mémoire de trame ;
(e) une troisième voie de traitement des images dites mobiles par filtrage, comprenant elle-même, en série, un filtre vertical de la sortie de la deuxième mémoire de trame suivi d'un troisième commutateur prévu pour recevoir en parallèle la sortie dudit filtre et le signal I₁ et délivrer successivement à ladite fréquence double de celle de la séquence d'images, cette sortie ou ce signal I₁ ;
(f) un circuit d'aiguillage prévu pour recevoir d'une part, en parallèle, les sorties desdites première, deuxième et troisième voies de traitement et d' autre part l' information additionnelle prévue par le standard HDMAC relativement à la sortie de voie à sélectionner en fonction de l'importance dudit mouvement entre trames.

Avec de telles dispositions, les papillotements des zones de forte luminosité et des hautes fréquences verticales sont éliminés. Le principe adopté présente en outre l'intérêt, dans le cas du standard HD-MAC, d'être entièrement compatible avec les procédés de codage et de décodage tels que décrits, puisqu' il n'utilise alors que les données d'assistance numérique transmises par le canal DATV.

Le document "Compatible systems for high-quality television", SMPTE Journal, juillet 1983, pp.719-723, décrit certes le principe qui consiste à doubler le rythme de signaux d'image pour éliminer certains défauts dans les images restituées. Cependant ce principe de doublement n'est pas appliqué, comme dans le cas présent, à un système de décodage de signaux à haute définition tel que celui qui a été mentionné plus haut et qui utilise trois types de sous-échantillonnage correspondant à trois rythmes de transmission différents, avec une transmission d'informations additionnelles dans un canal dit d'assistance numérique. De plus, la solution proposée dans ce document se limite à une simple répétition de trame, ce qui est très incomplet par rapport aux caractéristiques revendiquées dans le cas de l'invention.

Dans un mode particulier de réalisation, le dispositif conforme à cette invention est caractérisé en ce que le circuit de division par deux de la durée des lignes comprend deux mémoires de trame en parallèle, prévues pour fonctionner alternativement l'une en mode d'écriture à une fréquence déterminée et l'autre en mode de lecture à la fréquence double de la fréquence déterminée, et un quatrième commutateur, commandé à la fréquence de 50 hertz pour sélectionner alternativement la sortie de l'une ou de l'autre desdites deux mémoires.

Le filtre vertical utilisé dans la troisième voie de traitement est en général un filtre spatial d'interpolation verticale entre deux lignes, mais il peut comprendre également un filtre temporel.

Enfin, l'invention est utilisable notamment dans un décodeur d'images de télévision à haute définition comprenant un dispositif de décodage desdites images. caractérisé en ce qu'il comprend également, en série avec ledit dispositif de décodage, un dispositif de doublement du rythme des images décodées, ledit dispositif étant éventuellement intégrable de façon commune avec le dispositif de décodage.

Les particularités et avantages de l'invention apparaîtront maintenant de façon plus détaillée dans la description qui suit et dans les dessins annexés, donnés à titre d'exemple non limitatif et dans lesquels :
- la figure 1 montre un exemple de réalisation de décodeur incluant un dispositif de conversion de rythme temporel selon l'invention ;
- les figures 2, 3, 4a et 4b sont des tableaux mettant en évidence, de façon schématique, le mode d'utilisation des trames d'origine des signaux de télévision pour générer les signaux corrigés de tout effet de papillotement ; - la figure 5 montre un autre exemple de réalisation de décodeur, incluant une variante de réalisation du dispositif de conversion de rythme selon l'invention.

Le principe de conversion de rythme décrit ici à titre d'exemple consiste essentiellement à considérer une séquence d'images d'origine, à une fréquence de 50 hertz, et à diviser par deux, dans un premier temps, la durée des lignes composant ces images. Les trames successives composant lesdites images sont alors mémorisées sur un horizon de travail correspondant à une période de ces images, c'est-à-dire ici 40 millisecondes, mais à la cadence correspondant au rythme que l'on veut obtenir après conversion.

Les trames ainsi mémorisées sont alors traitées en parallèle dans trois voies de traitement opérant une simple répétition de trame dans le cas d'images très faiblement mobiles, une demi-somme compensée en mouvement dans le cas d'images à mouvements de moyenne importance et donc compensables, et par filtrage dans le cas d'images aux mouvements importants. Enfin, l'une seulement des trois séquences de trames ainsi traitées est sélectionnée pour constituer les signaux à obtenir, au nouveau rythme après conversion. La sélection est opérée selon la vitesse des mouvements estimés d'une image à la suivante. Dans le cas du standard HD-MAC de télévision à haute définition, cette sélection est effectuée en utilisant les signaux d'assistance numérique prévus dans les spécifications.

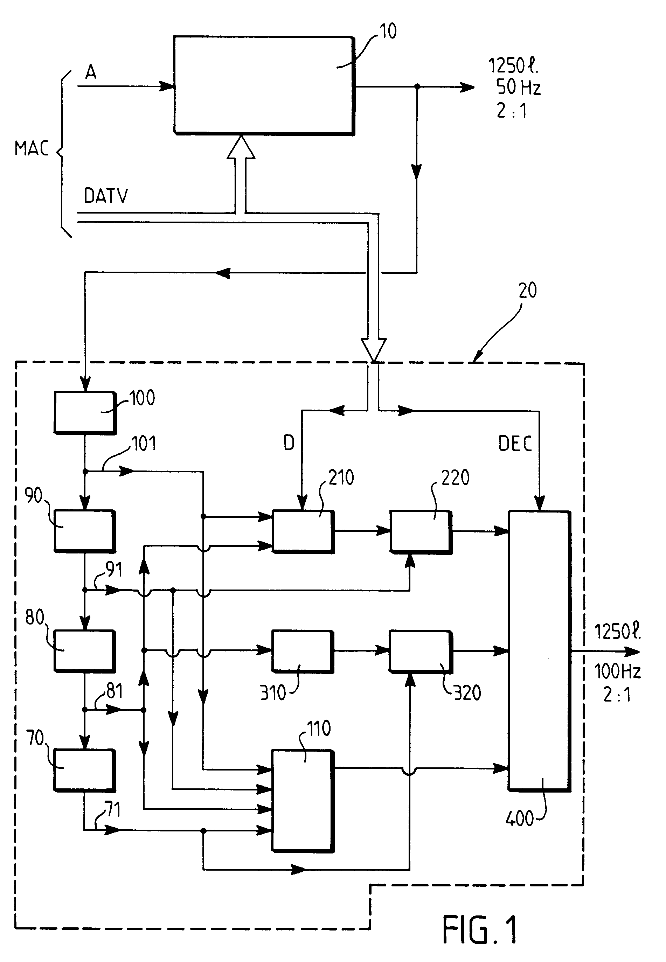

La figure 1, qui montre un exemple de réalisation préférentiel de décodeur incluant un dispositif de conversion de rythme pour la mise en oeuvre du procédé selon l'invention, comprend un dispositif de décodage proprement dit, référencé 10, et un dispositif de conversion de rythme, référencé 20. Le dispositif de décodage 10 reçoit ici des signaux vidéo numériques 625 ℓ, 50 Hz, 2:1, 720 p./ℓ (durée de ligne = 64 microsecondes), c'est-à-dire des images dites compatibles MAC transmises par le canal analogique (noté A) prévu dans ce standard de télévision, et délivre des signaux 1250 ℓ, 50 Hz, 2:1, 1440 p./ℓ (durée de ligne = 32 microsecondes), c'est-à-dire des images à haute définition. Pour cette restitution d'images à haute définition, le dispositif de décodage 10 a ici utilisé des signaux véhiculés par le canal d'assistance numérique, à savoir : les vecteurs de déplacement par bloc d'image et les signaux de décision. Comme on va le voir ci-dessous plus en détail, le dispositif de conversion de rythme 20 reçoit lui aussi ces signaux "vecteurs de déplacement" et ces signaux de décision, ainsi que les signaux "haute définition" de sortie du dispositif de décodage 10.

Ce dispositif de conversion de rythme 20 comprend tout d'abord, dans l'exemple décrit, un circuit 100 de changement de période de ligne, composé ici simplement de deux mémoires de trame fonctionnant alternativement (l'une en mode d'écriture à la fréquence de 54 mégahertz et l'autre en mode de lecture à la fréquence de 108 mégahertz, la fréquence de base 27 mégahertz étant disponible dans le dispositif dedécodage 10) et d'un commutateur commandé à la fréquence de 50 hertz pour assurer ce fonctionnement alternatif. A partir des signaux à haute définition de période ligne 32 microsecondes, on obtient ainsi des signaux similaires mais de période ligne 16 microsecondes.

Le circuit 100 de changement de période de ligne est suivi, en série, de trois mémoires de trame 70, 80, 90 imposant chacune un retard de 10 millisecondes. Comme les signaux d'entrée comprennent une trame, successivement impaire et paire, toutes les 20 millisecondes, on constate que la présence de trois mémoires 70 à 90 permet de disposer de ces deux trames de la façon suivante : la première trame impaire est disponible à la fois sur la connexion 81 de sortie de la mémoire 80 et, après un retard de 10 ms, sur la connexion 71 de sortie de la mémoire 70, tandis que la deuxième trame, paire, qui la suit est disponible à la fois sur la connexion 101 de sortie du circuit 100 de changement de période de ligne et, après un retard de 10 ms, sur la connexion 91 de sortie de la mémoire 90. On appelle respectivement I₁, I₂, I₃, I₄ ces quatre signaux de sortie des mémoires 70, 80, 90 et du circuit 100, décalés de 10 ms chacun par rapport au suivant, et qui vont être utilisés de manière distincte comme indiqué ci-après.

On rappellera cependant, préalablement, la constitution du décodeur, et également celle du codeur correspondant.

Ce codeur comprend trois branches de traitement en parallèle recevant chacune sur leur entrée commune les images à haute définition 1250 ℓ, 50 Hz, 2:1, 1440, qui sont, pour leur traitement, découpées en blocs balayés successivement. Chaque branche est caractérisée par la gamme des vitesses de déplacement ou mouvements qu'elle est appelée à prendre en compte, et l'on distingue ici la branche dite 80 millisecondes, à laquelle correspondent dans le cas présent une fréquence de trame de 12,5 hertz et une gamme de mouvements de 0 à 0,5 élément d'image (ou pixel) par période de 40 ms, la branche dite 40 millisecondes, à laquelle correspondent une fréquence de trame de 25 hertz et une gamme de mouvements de 0,5 à 12 pixels par période de 40 ms, et la branche dite 20 millisecondes, à laquelle correspondent une fréquence de trame de 50 hertz et la gamme des mouvements plus importants que 12 pixels par période de 40 ms. En sortie de ces trois branches, un circuit d'aiguillage sélectionne une séquence de points ou échantillons dont le contenu, correspondant à chaque bloc des images d'origine, provient de l'une ou l'autre des trois branches, selon la valeur d'un signal de décision émis par un circuit de prise de décision lui-même précédé d'un circuit d'estimation de la gamme des mouvements.

La sortie du circuit d'aiguillage est alors délivrée pour transmission par l'intermédiaire du canal analogique pour véhiculer les différentes composantes analogiques du signal de télévision. A ce canal analogique est associé un canal auxiliaire dit d'assistance numérique, ou canal DATV, qui transmet les informations complémentaires telles que vecteurs de déplacement D entre images, signaux de décision DEC, et appelées données ou signaux d'assistance numérique.

Le décodeur, qui reçoit d'une part les signaux transmis par le canal analogique et d'autre part les données d'assistance numérique (vecteurs de déplacement D, signaux de décision DEC) transmises par le canal DATV, comprend lui aussi trois branches en parallèle recevant les images transmises et dont les sorties sont envoyées vers un circuit d'aiguillage. Ce circuit d'aiguillage, là encore, reçoit le signal de décision transmis par le canal DATV et sélectionne, comme à l'émission, celle des sorties des branches 20 ms, 40 ms, 80 ms qui convient, selon l'information de mouvement reçue. Cette sortie du décodeur est l'image 1250 ligne, 50 Hz, 2:1, 1440 p./ℓ (durée des lignes = 32 microsecondes) qui est envoyée vers le circuit 100 de changement de période de ligne du dispositif selon la présente invention.

Conformément à l'invention, le dispositif 20 de conversion de rythme comprend également, associées aux éléments 70 à 100, trois voies de traitement des signaux I₁ à I₄ présents sur les connexions 71 à 101. Ces trois voies assurent chacune un traitement correspondant respectivement aux trois branches 80, 40, 20 millisecondes.

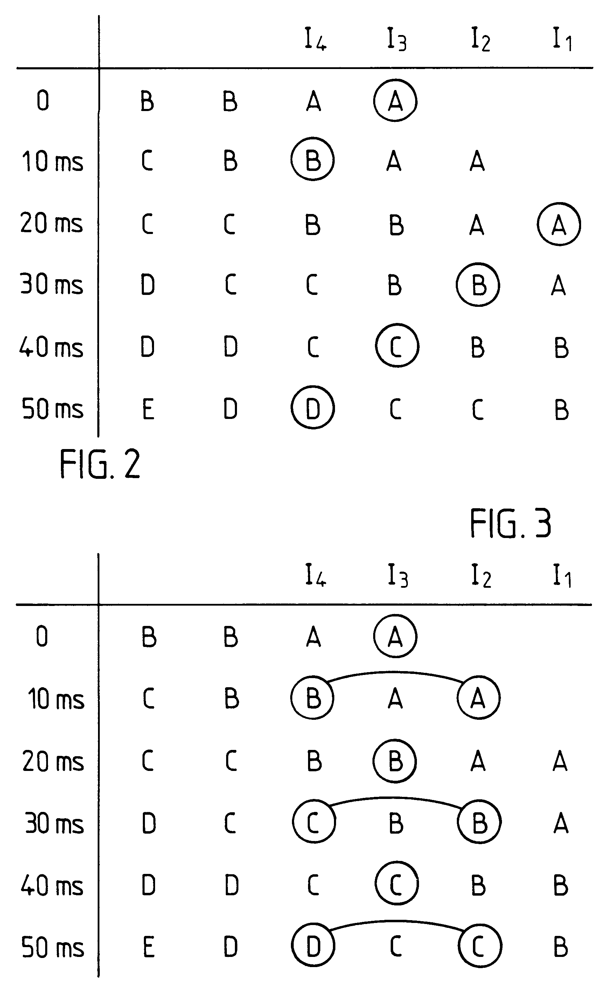

La première voie, correspondant à la branche 80 ms, dite stationnaire, comprend simplement un commutateur 110, commandé à la fréquence de 100 hertz pour prélever successivement les signaux I₃, I₄, I₁, I₂, dans cet ordre. Ce prélèvement toutes les 10 millisecondes est schématisé sur le tableau de la figure 2, sur laquelle on a représenté en abscisse les trames A, B, C, D, E, etc... se présentant successivement sur les connexions 71 à 101 pour constituer les signaux I₁ à I₄, et en ordonnée la cadence de fonctionnement du commutateur 110. Les signaux successivement prélevés par le commutateur 110 sont entourés d'un cercle. La succession des trames à haute définition à 50 hertz était la suivant : A B C D E, etc..., à une cadence de 20 millisecondes. La lecture de la figure 2 montre que la succession des signaux en sortie du commutateur 110 commandé à 100 hertz est la suivant : A B A B C D C D E F E, etc..., à une cadence de 10 millisecondes. On a ainsi réalisé un doublement de fréquence trame, par répétition de trame, ce qui élimine le papillotement indésirable.

La deuxième voie, correspondant à la branche 40 ms, dite compensable, comprend en série un additionneur 210 et un commutateur 220, également commandé à la fréquence de 100 hertz pour prélever successivement soit la sortie de l'additionneur 210, soit le signal I₃. L'additionneur 210 permet d'effectuer la demi-somme des signaux I₂ et I₄ (qui correspondent à deux trames successives, impaire et paire, du signal à haute définition à 50 hertz), en tenant compte du déplacement qui s'est produit d'un signal à l'autre. Ce déplacement est, ici, connu grâce au vecteur de déplacement déterminé à l'émission, dans le dispositif de codage, et transmis par le canal d'assistance numérique DATV. Ce vecteur de déplacement est donc fourni à l'additionneur 210.

Le prélèvement opéré toutes les 10 millisecondes par le commutateur 220 est alors schématisé sur le tableau de la figure 3 montrant de même les trames A B C D E, etc... constituant successivement les signaux I₁, I₂, I₃, I₄ aux différents instants de prélèvement, à la cadence du commutateur. Les signaux prélevés successivement par le commutateur 220 sont, alternativement, le signal I₃, entouré d'un cercle, et la demi-somme compensée en mouvement, I₂ + I₄, indiquée de manière claire sur la figure 3. La succession des trames à 50 hertz était A B C D E, etc..., à la cadence de 20 millisecondes. La lecture de la figure 3 montre que la succession des signaux en sortie du commutateur 220 est maintenant constituée de la façon suivante :
A
(A+B)/2
B
(B+C)/2
C
(C+D)/2
D
(D+E)/2, etc...,
les signaux se suivant dans cette séquence à une cadence de 10 millisecondes. On a encore réalisé là un doublement de fréquence trame, par demi-somme avec compensation de mouvement.

La troisième voie, correspondant à la branche 20 ms, dite non compensée, comprend en série un filtre et un commutateur 320, également commandé à la fréquence de 100 hertz pour prélever successivement soit la sortie du filtre, soit le signal I₁. Dans le mode de réalisation de la figure 1, le filtre est par exemple un filtre vertical 310 qui permet de générer par simple interpolation verticale entre lignes une nouvelle trame, A' pour A, B' pour B, C' pour C, etc... La succession des trames à 50 hertz était A B C D E, etc...., avec la trame B décalée verticalement d'un demi-intervalle ligne par rapport à A, ave cla trame C décalée verticalement d'un demi-intervalle ligne par rapport à B et donc superposable à A, et ainsi de suite. Il s'ensuit que, A' étant également, par le jeu du principe d'interpolation choisi, décalée d'un demi-intervalle ligne par rapport à A, et d emême pour C' par rapport à C, D' par rapport à D, la suite des trames à 100 hertz ne peut pas être du type A A' BB' CC' DD'.

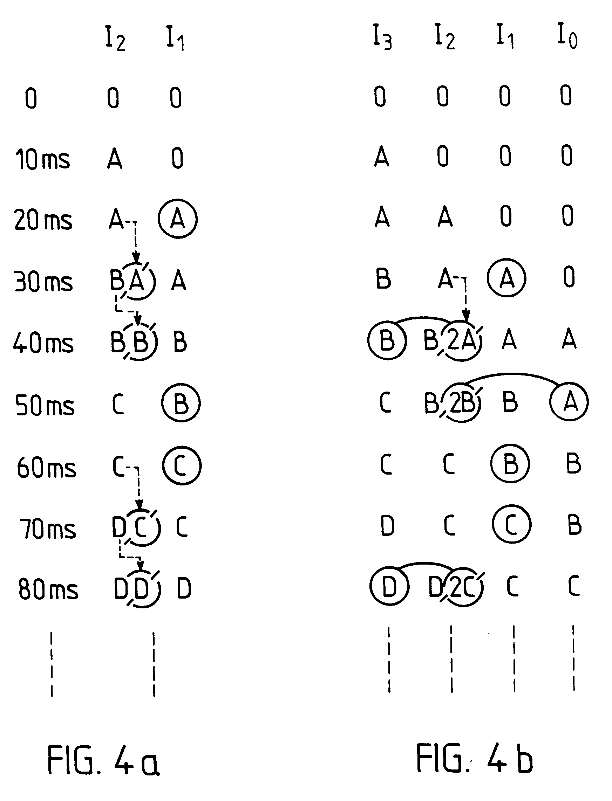

On va plutôt, comme le montre la figure 4a, prélever successivement la suite de signaux AA' B'B CC' D'D, etc..., dans laquelle chaque trame est, maintenant, bien décalée verticalement d'un demi-intervalle ligne par rapport à la précédente. Le commutateur 320 de la figure 1 prélève donc successivement, par exemple :
- à l'instant 20 ms, la trame A = I₁ sur la connexion 71 ;
- à l'instant 30 ms, la trame A′ filtrée de sortie du filtre 310 (le temps de filtrage étant nettement inférieur à 10 ms, et la trame A ayant été présente à l'instant de commutation précédent -20 ms- sur la connexion 81 d'entrée du filtre 310, cette trame A' peut effectivement être disponible à l'instant 30 ms) ;
- à l'instant 40 ms la trame B′ filtrée de sortie du filtre 310 (cette trame B′ est effectivement disponible pour la même raison que la trame A′ précédemment) ;
- à l'instant 50 ms, la trame B = I₁ sur la connexion 71 ;
- à l'instant 60 ms, la trame C = I₁ sur cette même connexion 71, etc... de façon périodique, la périodicité concernée étant de 40 millisecondes. On a une nouvelle fois réalisé le doublement de fréquence trame souhaitée.

Le dispositif 20 de conversion de rythme comprend enfin un circuit d'aiguillage 400 qui, selon le signal de décision DEC reçu après transmission par le canal DATV, dirige la sortie de l'un des commutateurs 110, 220 ou 320 vers la sortie du dispositif 20. Le signal de sortie ainsi constitué est bien un signal 1250 ℓ, 100 Hz, 2:1, 1440 p./ℓ, d'où tout effet de papillotement est désormais absent.

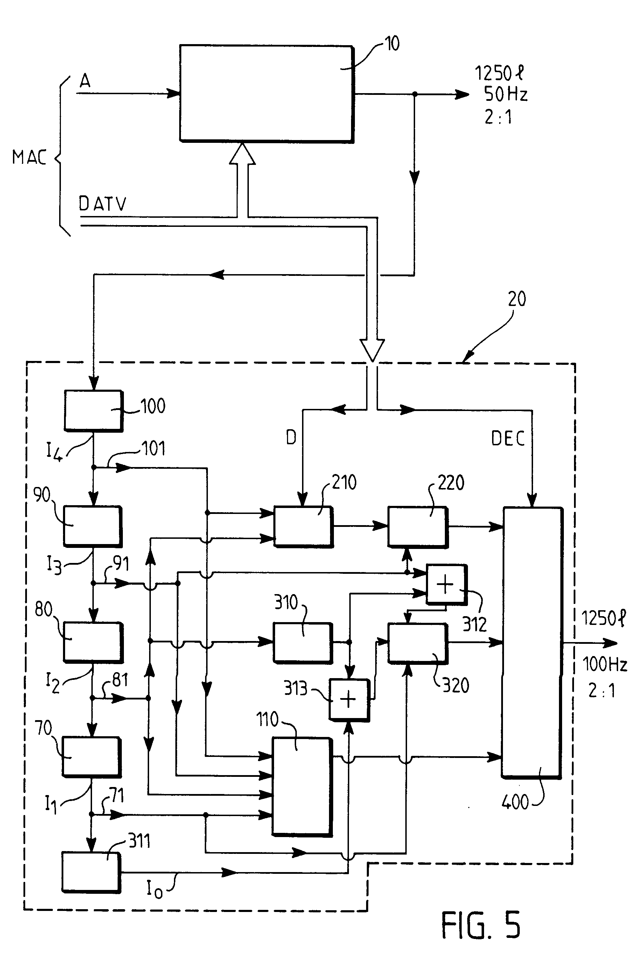

Bien entendu, la présente invention n'est pas limitée à l'exemple de réalisation ci-dessus décrit et représenté, à partir duquel des variantes peuvent être proposées sans pour cela sortie du cadre de l'invention. La figure 5 montre par exemple une variante de réalisation du décodeur selon l'invention, dans laquelle le filtrage vertical décrit ci-dessus est complété par un filtrage temporel qui va permettre d'insérer entre les trames A et B des trames composées de façon plus complexe. On va par exemple constituer une succession de trames à 100 hertz constituée de la façon suivante :
A
(2A′+B)/3
(A+2B′)/3
B
C
(2C′+D)/3
(C+2D′)/3
D
E (2E′+F)/3, etc....

Le filtre associe alors au filtre vertical 310, à cet effet, une quatrième mémoire de trame 311, un circuit d'addition 312 de la sortie du filtre 310 et du signal I₃, et un circuit d'addition 313 de cette sortie du filtre 310 et de la sortie, appelée I₀, de la quatrième mémoire de trame 311.

Comme dans les cas précédents, la figure 4b met en évidence de quelle manière est constituée à la cadence de 100 hertz la nouvelle suite de signaux : A (2A′+B)/3 (A+2B′)/3 B, etc... Le commutateur 320, en effet, prélève cette fois, successivement :
- à l'instant 30 ms, la trame A = I₁ ;
- à l'instant 40 ms, la sortie du circuit d'addition 312 (ce circuit d'addition n'est pas un simple additionneur mais, plus précisément, il reçoit A′, qui est la sortie filtrée du filtre vertical 310, et B = I₃, et délivre le signal (2A′+B)/3) ;
- à l'instant 50 ms, la sortie du circuit d'addition 313 (de même, ce circuit d'addition est prévu pour recevoir B′, sortie filtrée du filtre 310, et A = I₀, et délivrer le signal (A+2B′)/3) ;
- à l'instant 60 ms, la trame B = I₁ ;
- à l'instant 70 ms, la trame C = I₁, etc... On a là encore réalisé un doublement de la fréquence trame.

## Revendications

1. Dispositif de doublement du rythme de signaux de télévision selon un principe de répétition de trame, caractérisé en ce que, lesdits signaux correspondant à une séquence d'images de télévision à haute définition conformes au standard HDMAC et organisées en trames impaires et paires entrelacées, ledit dispositif comprend :
(a) un circuit (100) de division par deux de la durée des lignes de la séquence d'images ;
(b) en série avec ledit circuit, un étage de mémorisation des trames successives fournies par ledit circuit (100), sur une durée telle que les informations présentées en sortie dudit circuit (100) et dudit étage de mémorisation correspondent à une période d'image, et à la cadence correspondant au rythme à obtenir après conversion, comprenant lui-même en série des première, deuxième et troisième mémoires de trame (70, 80, 90) imposant chacune un retard égal à la moitié de la période des trames de la séquence d'images, les signaux de sortie desdites première, deuxième et troisième mémoires de trame (70, 80, 90) et dudit circuit (100) étant appelés conventionnellement et respectivement I₁, I₂, I₃, I₄;
(c) une première voie de traitement des images dites stationnaires par répétition de chaque paire de trames sucessives, comprenant elle-même un premier commutateur (110) prévu pour recevoir en parallèle chacun des signaux I₁ à I₄ et délivrer successivement, à une fréquence double de celle de la séquence d'images, les signaux I₃, I₄, I₁, I₂ respectivement ;
(d) une deuxième voie de traitement des images dites faiblement mobiles ou compensables par demi-somme compensée en mouvement, comprenant elle-même, en série, d'une part un additionneur (210), prévu pour effectuer la demi-somme des signaux I₂ et I₄ correspondant à la trame paire courante et à la trame impaire qui l'a précédée tout en tenant compte, pour ladite compensation du mouvement d'un signal à l'autre, de l'information additionnelle (D) prévue par le standard HDMAC relativement au mouvement entre ces trames et reçue sur une troisème entrée dudit additionneur, et d'autre part un deuxième commutateur (220), prévu pour recevoir en parallèle ladite demi-somme compensée en mouvement et le signal I₃ et délivrer successivement, à ladite fréquence double de celle de la séquence d'images, cette demi-somme compensée ou ladite trame de sortie de la deuxième mémoire de trame ;
(e) une troisième voie de traitement des images dites mobiles par filtrage, comprenant elle-même, en série, un filtre vertical (310) de la sortie de la deuxième mémoire de trame suivi d'un troisième commutateur (320) prévu pour recevoir en parallèle la sortie dudit filtre et le signal I₁ et délivrer successivement à ladite fréquence double de celle de la séquence d'images, cette sortie ou ce signal I₁ ;
(f) un circuit d'aiguillage (400) prévu pour recevoir d'une part, en parallèle, les sorties desdites première, deuxième et troisième voies de traitement (110 ; 210, 220 ; 310, 320) et d'autre part l'information additionnelle prévue par le standard HDMAC relativement à la sortie de voie à sélectionner en fonction de l'importance dudit mouvement entre trames.

2. Dispositif selon la revendication 1, caractérisé en ce que le circuit (100) de division par deux de la durée des lignes comprend deux mémoires de trame en parallèle, prévues pour fonctionner alternativement l'une en mode d'écriture à une fréquence déterminée et l'autre en mode de lecture à la fréquence double de ladite fréquence déterminée, et un quatrième commutateur, commandé à la fréquence de 50 hertz pour sélectionner alternativement la sortie de l'une ou de l'autre desdites deux mémoires.

3. Dispositif selon l'une des revendications 1 et 2, caractérisé en ce que ledit filtre vertical comprend un filtre spatial d'interpolation vertical entre lignes.

4. Dispositif selon la revendication 3, caractérisé en ce que ledit filtre vertical comprend également un filtre temporel.

5. Décodeur d'images de télévision à haute définition comprenant un dispositif (10) de décodage desdites images, caractérisé en ce qu'il comprend également, en série avec ledit dispositif de décodage, un dispositif de doublement du rythme des images décodées conforme à l'une des revendications 1 à 4.

6. Décodeur selon la revendication 5, caractérisé en ce que ledit dispositif de doublement de rythme est intégrable de façon commune avec le dispositif de décodage.

## Claims

1. An arrangement for doubling the temporal rate of television signals in accordance with a field repetition principle, characterized in that, with said signals corresponding to a sequence of high-definition television pictures in conformity with the HDMAC standard and arranged in odd and even interlaced fields, said arrangement comprises:
(a) a circuit (100) for dividing the line periods of the sequence of pictures by two;
(b) in series with said circuit, a stage for storing the successive fields provided by said circuit (100) for such a period that the information components presented at the output of said circuit (100) and said memory stage correspond to a picture period and to the rate corresponding to the temporal rate to be obtained after conversion, itself comprising a series arrangement of first, second and third field memories 970, 80, 90) each imposing a delay which is equal to half the period of the fields of the sequence of the pictures, the output signals of said first, second and third field memories (70, 80, 90) and of said circuit (100) being conventionally denoted I₁, I₂, I₃, I₄, respectively;
(c) a first channel for processing the stationary pictures by repetition of each pair of successive fields, comprising a first change-over switch (110) for receiving, in parallel, each of the signals I₁ to ₄ and for successively supplying, at a frequency which is twice that of the sequence of pictures, the signals I₃, I₄, I₁, I₂, respectively;
(d) a second channel for processing the pictures of little motion or the pictures which can be compensated by the motion-compensated half sum, comprising a series arrangement of an adder (210) for taking the half sum of the signals I₂ and I₄ corresponding to the current even field and to the odd field which has preceded it, while taking into account for said motion compensation of one signal with respect to the other, the additional information (D) provided by the HDMAC standard relating to the motion between these fields and received at a third input of said adder, and a second change-over switch (220) for receiving, in parallel, said motion-compensated half sum and the signal I₃ and for successively supplying, at said frequency which is twice that of the sequence of pictures, said compensated half sum or said output field of the second field memory;
(e) a third channel for processing the pictures having motion by way of filtering, comprising a series arrangement of a vertical filter (310) for the output signal of the second memory, followed by a third change-over switch (320) for receiving, in parallel, the output signal of said filter I₁, and for successively supplying, at said frequency which is twice that of the sequence of pictures, this output signal or this signal I₁;
(f) a routing circuit (400) for receiving, in parallel, the output signals of said first, second and third processing channels (110; 210, 220; 310, 320) and the additional information provided for in the HDMAC standard relating to the channel output to be selected as a function of importance of said motion between the fields.

2. An arrangement as claimed in Claim 1, characterized in that the circuit (100) for dividing the line periods by two comprises two parallel field memories arranged function alternately in the write mode at a given frequency and in the read mode at the frequency which is double the given frequency, and a fourth change-over switch which is controlled by the 50 Hz frequency for alternately selecting the output signal of the one or the other of said two memories.

3. An arrangement as claimed in any one of Claims 1 and 2, characterized in that said vertical filter comprises a spatial filter for vertical interpolation between lines.

4. An arrangement as claimed in Claim 3, characterized in that said vertical filter also comprises a temporal filter.

5. A high-definition television picture decoder comprising an arrangement (10) for decoding said pictures, characterized in that it also comprises an arrangement for doubling the temporal rate of pictures decoded in conformity with any one of Claims 1 to 4.

6. A decoder as claimed in Claim 5, characterized in that said temporal rate doubling arrangement is integrable with the decoding arrangement in a common manner.

## Patentansprüche

1. Anordnung zur Verdoppelung der Rate von Fernsehsignalen entsprechend einem Teilbildwiederholungsprinzip, dadurch gekennzeichnet, daß diese Anordnung die nachfolgenden Elemente aufweist, wobei die genannten Signale einer Folge von Hochauflösungsfernsehbildern nach der Norm HDMAC entsprechen, die in geradzahligen und ungeradzahligen Teilbildern im Zeilensprungverfahren organisiert sind,:
(a) eine Schaltung (100) zum Halbieren der Zeilenperioden der Folge von Bildern;
(b) in Reihe mit der genannten Schaltung eine Speicherstufe zur Speicherung der von der genannten Schaltung (100) gelieferten aufeinanderfolgenden Teilbilder wahrend einer solchen Dauer, daß die am Ausgang der genannten Schaltung angebotenen Informationen einer Bildperiode entsprechen und mit einer Rate, die der nach der Umwandlung zu erzielenden Rate entspricht, wobei die Speicherstufe an sich eine Reihenschaltung aus ersten, zweiten und dritten Teilbildspeichern (70, 80, 90) aufweist, die je eine Verzögerung entsprechend der halben Teilbildperiode der Bildfolge herbeiführen, wobei die Ausgangssignale der genannten ersten, zweiten und dritten Teilbildspeicher (70, 80, 90) und der genannten Schaltung (100) auf herkömmliche Weise als I₁, I₂, I₃ bzw. I₄ bezeichnet werden;
(c) einen ersten Kanal zum Verarbeiten der als Standbild bezeichneten Bilder durch Wiederholung jedes Paares aufeinanderfolgender Teilbilder, wobei dieser Kanal an sich einen ersten Schalter (110) aufweist zum auf parallele Weise Empfangen jedes der Signale I₁ bis I₄ und zum in aufeinanderfolgender Weise Liefern der Signale I₃, I₄, I₁ bzw. I₂ mit einer Frequenz, die der doppelten Frequenz der Bildfolge entspricht;
(d) einen zweiten Kanal zum Verarbeiten der Bilder die als "einigermaßen bewegt" oder als durch die bewegungskompensierte Halbsumme kompensierbar bezeichnet sind, wobei dieser Kanal an sich eine Reihenschaltung aus einerseits einem Addierer (210) zum Erhalten der halber Summe der Signale I₂ und I₄, die dem aktuellen geradzahligen Teilbild und dem ihm vorhergehenden ungeradzahligen Teilbild entsprechen, wobei für den genannten Bewegungsausgleich des einen Signals gegenüber dem anderen Signal die durch die Norm HDMAC gelieferte und an einem dritten Eingang des genannten Addierers empfangene, zusätzliche Information (D) in bezug auf die Bewegung zwischen diesen Teilbildern berücksichtigt wird, und andererseits einem zweiten Schalter (220) aufweist zum in paralleler Weise Empfangen der bewegungskompensierten Halbsumme und des Signals I₃ und zum nacheinander Liefern dieser kompensierten Halbsumme oder des Ausgangsteilbildes des zweiten Teilbildspeichers mit der Frequenz, die der doppelten Frequenz der Bildfolge entspricht;
(e) einen dritten Kanal zum Verarbeiten der bewegten Bilder durch Filterung, wobei dieser Kanal an sich eine Reihenschaltung aus einem Vertikal-Filter (310) für das Ausgangssignal des zweiten Teilbildspeichers mit einem nachfolgenden dritten Schalter (320) zum in paralleler Weise Empfangen des Ausgangssignals des genannten Filters und des Signals I₁ und zum nacheinander Liefern dieses Ausgangssignals oder dieses Signals I₁ mit der Frequenz, die der doppelten Frequenz der Bildfolge entspricht;
(f) einen Umschalter (400) zum in paralleler Weise Empfangen einerseits die Ausgangssignale der genannten ersten, zweiten und dritten Verarbeitungskanäle (110; 210, 220; 310, 320) und andererseits der in der Norm HDMAC vorgesehenen zusätzlichen Information in bezug auf das als Funktion der Wichtigkeit der genannten Bewegung zwischen den Teilbildern zu selektierende Ausgangssignal.

2. Anordnung nach Anspruch 1, dadurch gekennzeichnet, daß die Zeilendauer-Halbierschaltung (100) eine Parallelschaltung zweier Teilbildspeicher aufweist, die zum wechselweisen Funktionieren vorgesehen sind, und zwar der eine in der Schreib-Betriebsart mit einer vorbestimmten Frequenz und der andere in der Lese-Betriebsart mit der Frequenz, die der doppelten genannten bestimmten Frequenz entspricht, sowie einen vierten Schalter, der mit der Frequenz von 50 Hz gesteuert wird zum wechselweisen Selektieren des Ausgangssignals des einen oder des anderen der genannten zwei Speicher.

3. Anordnung nach einem der Ansprüche 1 und 2, dadurch gekennzeichnet, daß das genannte Vertikalfilter ein Raumfilter zum vertikalen Interpolieren zwischen Zeilen aufweist.

4. Anordnung nach Anspruch 3, dadurch gekennzeichnet, daß das genannte Vertikalfilter ebenfalls ein Zeitfilter aufweist.

5. Hochauflösungsfernsehbilddecoder mit einer Anordnung (10) zum Decodieren der genannten Bilder, dadurch gekennzeichnet, daß er ebenfalls in einer Reihenschaltung mit dem genannten Decoder eine Anordnung zur Verdoppelung der Rate der decodierten Bilder nach einem der Ansprüche 1 bis 4 aufweist.

6. Decoder nach Anspruch 5, dadurch gekennzeichnet, daß die genannte Anordnung zur Verdoppelung der Rate auf übliche Weise mit dem Decoder integrierbar ist.
